# EUROPÄISCHE PATENTANMELDUNG

(11) **EP 4 831 428 A1**
(43) Veröffentlichungstag der Anmeldung: **28.10.2026**
(21) Anmeldenummer: 25172419.1
(22) Anmeldetag: 24.04.2025
(51) Int. Cl.: E05B 15/00, E05C 1/04, F16B 21/00, E05B 47/00, E05B 15/04, E05C 5/02

(54) **RASTBOLZEN**

(71) Anmelder: Otto Ganter GmbH & Co. KG Normteilefabrik, 78120 Furtwangen (DE)
(72) Erfinder: ROMBACH, Patrick, 78120 Furtwangen (DE)
(74) Vertreter: Riebling, Peter

(57) **Zusammenfassung**

Rastbolzen (1) mit einer zylindrischen Bolzenführung (3), in der ein axial verschiebbarer Bolzen (2) mit einem Verriegelungsende (15) und einem Betätigungsende (16) gelagert ist, wobei der Bolzen (2) zwischen zwei axialen Endpositionen verschiebbar ist und mit dem Betätigungselement verbunden ist, wobei an der Bolzenführung (3) mindestens ein Sensor (44) befestigt ist, der die Endpositionen des Bolzens (2) durch mindestens einen mit dem Bolzen (2) verbundenen Magneten (12) erfasst und ein weiterverarbeitbares Signal erzeugt, wobei sich der Magnet (12) im Innenraum der Bolzenführung (3) befindet und an einer Schulter (23) am Außenumfang des Bolzens (2) anliegt und mit diesem in axialer Richtung bewegbar ist, wobei der Magnet (12) entlang des Schaftes (20) des Bolzen (2) axial verschiebbar gelagert ist.

## Beschreibung

Gegenstand der Erfindung ist ein Rastbolzen nach dem Oberbegriff des Patentanspruchs 1.

Ein handbetätigter Rastbolzen ist beispielsweise in der DE 10 2012 112 610 A1 offenbart und besteht aus einer Hülse sowie einem in der Hülse gelagerten Bolzen, der ein Verriegelungsende und ein Betätigungsende aufweist. Der Bolzen ist innerhalb der Hülse axial verschiebbar gelagert und kann zwischen einer ersten und einer zweiten axialen Endposition bewegt werden.

Dabei kann der Bolzen zumindest in einer axialen Endposition gegenüber der Hülse mit einem Rastmechanismus einrasten und so zeitweise oder dauerhaft fixiert werden. Zusätzlich kann der Rastbolzen über eine selbsttätige Rückstellung verfügen und dadurch eine Grundstellung einnehmen.

Ob der Rastbolzen zur Betätigung bzw. zur Ver- oder Entriegelung durch Drücken oder Ziehen des Betätigungselements, beispielsweise eines Knopfes, bewegt wird, hängt vom Einbauort des rückstellenden Elements, z. B. einer Druck- oder Zugfeder, ab.

Ein Nachteil dieses Rastbolzens besteht darin, dass ohne eine Sichtprüfung nicht festgestellt werden kann, in welcher Position sich der Bolzen befindet. Wird der Rastbolzen beispielsweise zur Fixierung eines Bauteils, wie einer Klappe an einem Maschinengehäuse, verwendet, ist es jedoch erforderlich, sicherzustellen, ob sich der Rastbolzen in seiner axialen Verriegelungsposition befindet oder ob diese aufgehoben ist. Nur so kann gewährleistet werden, dass das Bauteil sicher verriegelt bzw. entriegelt ist.

Mit den Rastbolzen nach dem Stand der Technik ist es jedoch nur möglich, die Position des Rastbolzens über visuelle Wahrnehmung zu erfassen.

Auch wenn sich der Bolzen scheinbar in seiner Verriegelungsposition befindet oder die Sicht auf den Bolzen durch ein anderes Bauteil verdeckt ist, kann von einem entfernten Standpunkt aus nicht festgestellt werden, ob der Rastbolzen tatsächlich in seiner Verriegelungsposition eingerastet und festgelegt ist. So könnte sich der Rastbolzen beispielsweise durch Vibration aus seiner Ver- oder Entriegelungsstellung lösen, ohne dass dies bemerkt wird.

Die EP 3 527 760 B1 offenbart einen Rastbolzen mit einer zylindrischen Bolzenführung, in der ein axial verschiebbarer Bolzen mit einem Verriegelungsende und einem Betätigungsende gelagert ist. Der Bolzen ist zwischen zwei axialen Endpositionen verschiebbar und weist ein Betätigungselement auf. An der Bolzenführung ist mindestens ein Sensor befestigt, der die Endpositionen des Bolzens durch einen mit dem Bolzen verbundenen Magneten erfasst und ein weiterverarbeitbares Signal erzeugt. Der Magnet befindet sich im Innenraum der Bolzenführung und ist mit einer Schulter am Außenumfang des Bolzens verbunden, wobei er diesen ringförmig oder segmentartig umschließt.

Der Innenraum der Bolzenführung ist direkt an den Hub des Bolzens gebunden. Um einen größeren Hub zu ermöglichen, ist eine Vergrößerung des Innenraums erforderlich, da der mit dem Bolzen verbundene Magnet eine größere Strecke zurücklegt. Dies führt zu einer Zunahme des Platzbedarfs des gesamten Rastbolzens.

Besonders in sicherheitsrelevanten Anwendungen, wie sie in großen Anlagen erforderlich sind, muss der Rastbolzen jedoch über eine größere Strecke betätigt werden, wobei die ausgerastete Position des Bolzens präzise bestimmt und überwacht werden muss.

Die Aufgabe der vorliegenden Erfindung besteht darin, einen Rastbolzen der bekannten Art so weiterzuentwickeln, dass der Innenraum der Bolzenführung unabhängig vom Hub des Bolzens optimiert wird, ohne die Funktionalität des Systems - insbesondere die präzise Erfassung der Endpositionen des Bolzens durch den Magneten - zu beeinträchtigen.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Vorteilhaftes Merkmal ist, dass der Magnet entlang des Schaftes des Bolzens axial verschiebbar gelagert ist.

Somit gelangt der Magnet beim Ziehen des Bolzens wegverzögert in den Erfassungsbereich des Sensors. So gelangt beim Ziehen des Bolzens der Magnet aufgrund einer Wegverzögerung verzögert in den Erfassungsbereich des Sensors. Die Schaltabfrage erfolgt dabei erst, wenn der Magnet eine bestimmte Position erreicht, unabhängig von der Geschwindigkeit des Bolzenzugs. Dadurch wird sichergestellt, dass der Sensor erst bei einer festgelegten Wegstrecke reagiert, was eine präzise Erfassung der Endposition ermöglicht.

Eine Schulter auf dem Schaft des Bolzens nimmt erst ab einem Bereich oberhalb der Mitte zwischen der ersten axialen Endposition oder der zweiten axialen Endposition den Magneten in Richtung der zweiten axialen Endposition mit.

Bei einem beispielhaften Hubweg von 10 mm ist eine Bewegung des bevorzugt ringförmigen Magneten von lediglich 3 bis 4 mm ausreichend, um eine magnetische Dämpfung zu detektieren. Der Magnetkörper ist dabei nicht fest mit dem Bolzen verbunden, sondern wird erst gegen Ende des Hubwegs von diesem in axialer Richtung mitgenommen. Zu diesem Zweck weist der mittige Bolzen eine radiale Schulter auf, auf der der bevorzugt ring- bzw. kreisförmige Magnet aufliegt, sobald der Rastbolzen bereits eine gewisse Strecke angehoben wurde.

Im Gegensatz zu einem ortsfesten Magneten, wie er aus dem Stand der Technik bekannt ist, wird der Magnet hier erst am "Ende" des Hubwegs mitgenommen und nur so weit, wie es für die Signalerzeugung erforderlich ist. Bei dieser Konstruktion ist ein größerer Hub nicht notwendig.

Die Hubkraft wirkt dabei auf den Magneten entgegen einer Spiralfeder, welche in ihrer Funktion als Rückstellfeder später noch beschrieben wird. Der Magnet muss nicht vollständig vom Sensorring überdeckt sein; eine Annäherung genügt bereits, um ein Signal zu erzeugen. Der Sensor reagiert somit auf die magnetische Nähe, um so eine Schaltabfrage auszulösen. Dabei ist es jedoch wichtig, dass der Magnet eine bestimmte Mindeststrecke zurücklegt, die abhängig von der Größe des Bauteils ist, um ein messbares Signal zu erzeugen. Diese Mindeststrecke stellt sicher, dass der Magnet ausreichend in den Bereich des Sensors gelangt, sodass eine klare und zuverlässige Erkennung der Position des Bolzens möglich ist.

Ein weiteres Merkmal der Erfindung ist das zweigeteilte Gehäuse, bei dem die Gehäusehälften über einen Fügesitz miteinander verbunden sind. Dies bietet Vorteile in Bezug auf die Bolzenführung und ermöglicht eine besonders einfache Integration des Magneten bei der Montage der Bolzenführung, was zu einer Optimierung des Bauraums führt.

So ist die Bolzenführung im Bereich des Hohlraums, in dem der Magnet bewegbar gelagert ist als zweigeteilte Baugruppe ausgeführt und besteht aus einem oberen und einem unteren Gehäuse. Diese beiden Gehäuseteile können z. B. mittels einer Gewindeverbindung, eines Pressverbands oder durch Laserschweißen miteinander verbunden werden.

Der Bolzen kann in einer weiteren Ausführungsform an einer oder beiden Endpositionen durch Rastmechanismen, Reibung oder Haftung gehalten werden.

Anstelle einer Einrastabfrage wird in dieser Erfindung eine Ausrastabfrage geschützt. Das bedeutet, dass der ausgerastete Zustand signaltechnisch erfasst wird, wobei z. B. ein magnetgestützter Sensor zum Einsatz kommt.

Der Vorteil dieser Lösung besteht darin, dass die Erfassung als High-Signal ausgewertet werden kann. Das bedeutet, dass der Zustand nur dann als erreicht gilt, wenn ein High-Signal erkannt wird. Im Gegensatz zum Stand der Technik, bei dem lediglich die Abwesenheit eines Signals als Kriterium für die Positionserkennung ausreicht, bietet diese Lösung eine zuverlässigere Möglichkeit zur Überwachung. Hierbei kann nicht nur die Endposition, sondern auch eine potenzielle Abweichung, wie beispielsweise eine ungewollte Ausrastung des Bolzens, frühzeitig erkannt werden. Diese Erfindung ermöglicht somit eine genauere Überwachung der Position und sorgt dafür, dass eine "positive" Rückmeldung immer gegeben ist, unabhängig davon, ob die Kommunikation über Funk oder Kabel erfolgt.

Der Magnet ist in einem Hohlraum der Bolzenführung gelagert, der in Richtung der ersten, dem Betätigungsende zugewandten axialen Endposition durch einen Absatz und in Richtung der zweiten, dem Verriegelungsende zugewandten axialen Endposition durch einen zweiten Absatz begrenzt ist. Der Bolzen wird jeweils durch eine Aussparung zwischen den Absätzen hindurchgeführt.

Zwischen der Oberseite des Magneten und dem Absatz ist eine Feder eingespannt, die als Rückstellfeder dient. In einer weiteren Ausführungsform kann bei einer vertikalen Einbaulage auf eine solche Rückstellfeder verzichtet werden, wobei der Magnet schwerkraftbedingt in seine Ausgangsposition auf den unteren Absatz zurückfällt.

Der Hohlraum setzt sich aus einer oberen Kammer, die dem Betätigungsende zugewandt ist, und einer unteren Kammer, die dem Verriegelungsende zugewandt ist, zusammen. Dabei ist die obere Kammer im Durchmesser gegenüber der unteren Kammer verkleinert, und der Übergang zwischen den beiden Kammern wird durch einen Absatz gebildet.

Bei Bewegung des Magneten kommt dieser in der ersten, dem Betätigungsende zugewandten axialen Endposition an diesem Absatz zur Anlage.

In der zweiten, dem Verriegelungsende zugewandten axialen Endposition kommt der Magnet an dem anderen Absatz zur Anlage.

Der Magnet kann entweder axial oder diametral magnetisiert sein, wobei auch andere Magnetisierungsrichtungen, wie beispielsweise radiale oder tangentiale Magnetisierungen, realisiert werden können. Darüber hinaus ist auch der Einsatz von mehrpoligen Magneten möglich, die mehrere magnetische Pole aufweisen und so die magnetische Feldverteilung beeinflussen. Bei Betätigung des Betätigungsknopfs zur axialen Bewegung des Bolzens in der Bolzenführung wird der Ringmagnet relativ zu einem im Bereich der Bolzenführung angebrachten Sensor bewegt.

Der Magnet umschließt den Bolzen ringförmig oder segmentartig. Der Magnet kann aber auch eine ovale oder polygonale Formgebung aufweisen, wobei die Formgebung bevorzugt an den Innenumfang des Führungskanals angepasst ist. Der verwendete Magnet kann beispielsweise ein Neodym- oder Ferritmagnet sein oder aus einem anderen Magnetwerkstoff bestehen. Für den standardisierten Einbau von Sensoren ist es erforderlich, dass die Magneten exakt gefertigt werden, um konsistente und reproduzierbare Schaltabstände zu gewährleisten. Alternativ können auch Magnete mit inhomogenen Magnetfeldern, variierender Materialgüte und Toleranzen in der Feldstärke verwendet werden, wobei die Genauigkeit der Schaltabstände in diesem Fall beeinträchtigt sein kann, jedoch die Qualität des Signals in vielen Anwendungen dennoch ausreichend bleibt, oder durch geeignete, iterative Abgleich- oder Teachvorgänge ein oder mehrere benötige Kompensations- oder Offsetfaktoren ermittelt werden, unter deren Anwendung die qualitätsbedingte, unzureichende Schaltpräzision ausgleichen kann Ein wesentliches Merkmal der Erfindung ist somit die Verwendung eines Rastbolzens mit einer Positionsabfrage, die es ermöglicht, festzustellen, ob der Rastbolzen ein- und/oder ausgerastet bzw. ver- und/oder entriegelt ist. Der Sensor erfasst dabei entweder die vordere (Verriegelungsposition) oder die hintere Endposition (Entriegelungsposition) oder beide Positionen des Bolzens. Hierzu ist an der Bolzenführung mindestens ein Sensor befestigt, der die beiden axialen Endpositionen des Bolzens als Messgröße erfasst und daraus ein weiterverarbeitbares Signal erzeugt, das hydraulisch, pneumatisch oder vorzugsweise elektrisch ist.

Zur Erfassung der Position eines in einer Bolzenführung beweglichen Bolzens wird ein Sensor verwendet, der diese Position erkennt und in ein Messsignal umwandelt. Ein solcher Sensor reagiert entweder berührungsfrei auf die Annäherung eines Objekts, d. h. ohne direkten Kontakt.

Die vorliegende Erfindung beansprucht die Verwendung der folgenden beispielhaft aufgeführten Näherungssensoren und linearen Wegmesssensoren:
Induktive Sensoren: Diese reagieren sowohl auf ferromagnetische als auch auf nichtmagnetische metallische Gegenstände.

Kapazitive Sensoren: Diese reagieren auf metallische und nichtmetallische Werkstoffe. Bei der Annäherung eines Objekts ändert sich die Schwingfrequenz des Sensorschwingkreises.

Magnetische Sensoren (z. B. Reedschalter, Reedkontakte oder Hallsensoren): Diese reagieren auf ein Magnetfeld.

Alternativ kann auch ein mechanischer bzw. taktiler Grenztaster verwendet werden, der ein auswertbares Signal auf pneumatischem, hydraulischem oder elektronischem Weg liefert.

Des Weiteren kann die Positionserfassung auch mittels RFID- (Radio Frequency Identification) oder NFC-Technologie (Near Field Communication) erfolgen, wobei der Sensor durch einen Transponder ersetzt wird. In diesem Fall befindet sich die entsprechende Antenne im Betätigungsknopf des beweglichen Bolzens.

Im Folgenden wird die Erfindung anhand eines magnetischen Sensortyps beschrieben, der auf ein Magnetfeld reagiert. In einer ersten Ausführungsform ist ein Permanentmagnet an dem beweglichen Teil des Rastbolzens angebracht. Je nach Stellposition des Rastbolzens befindet sich der Magnet in unterschiedlichen Abständen zum jeweiligen Sensor. Ein magnetischer Sensor bietet den Vorteil, dass er auch unter erschwerten Bedingungen, wie Hitze, Staub und Vibrationen, sowie durch nicht-ferromagnetische Objekte hindurch zuverlässig funktioniert.

Ein Betätigungselement zur Betätigung des Bolzens kann beispielsweise als Betätigungsknopf ausgeführt sein. Die vorliegende Erfindung ist jedoch nicht auf diese Ausführung als Betätigungsknopf beschränkt; auch ein Hebel, ein Riegel, ein T-Griff oder jedes andere Betätigungselement - mit oder ohne Handgriff - wird von der Erfindung erfasst.

Der Sensor ist unterhalb der Kontaktfläche positioniert, auf der die Unterseite des Betätigungsknopfs in der Verriegelungsposition des Rastbolzens aufliegt. Er ist in einem Sensorhalter eingebettet, der die Bolzenführung zumindest teilweise ringförmig umgibt. Erkennt der Sensor das Magnetfeld des Ringmagneten und überschreitet dieses einen bestimmten Schwellenwert, gibt der Sensor ein Signal aus, das die Entriegelungsposition des Bolzens anzeigt. Bereits die Annäherung oder Distanzierung des Ringmagneten vom Sensor kann von diesem erfasst werden.

Der Sensor kann während der Produktion des Bauteils programmiert werden, sodass beispielsweise ein Schwellenwert von 2-6 Millitesla überschritten werden muss, bevor der Sensor ein Signal aussendet.

Die Befestigung des Sensors erfolgt - lösbar oder nicht lösbar - form-, reib- oder kraftschlüssig an der Bolzenführung. Dies kann durch Aufschnappen, Klemmen, Aufstecken, Einschrauben oder mithilfe einer zusätzlichen Sensorhalterung am Bauteil erfolgen.

In einer weiteren Ausführungsform der Erfindung ist vorgesehen, dass auf einen Sensorhalter verzichtet wird und der Sensor direkt im Mantel der Bolzenführung untergebracht ist. Hierzu wird eine Aufnahmebohrung oder eine ähnliche Vertiefung in die Bolzenführung eingebracht, in die der Sensor eingeführt werden kann, um die Position des Bolzens zu erfassen.

Die Aufnahme für den Sensor kann beispielsweise auch direkt in das Bauteil eingegossen sein.

Die erfindungsgemäße Vorrichtung ist sowohl für Bolzen mit als auch ohne Rastsperre geeignet. Eine Rastsperre dient dazu, den Betätigungsknopf in einer bestimmten Endposition zu fixieren. Wird der Bolzen aus der Bolzenführung herausgezogen, kann sich die Unterseite des Betätigungsknopfes auf der Stirnseite einer hülsenförmig ausgebildeten Rastsperre, die im Folgenden als Rasthülse bezeichnet wird, abstützen.

Der Betätigungsknopf weist an seiner Unterseite mindestens eine Schulter auf, die den zylindrischen Aufnahmeraum im Inneren des hohlen Betätigungsknopfes abschnittsweise unterbricht. Dieser Aufnahmeraum dient zur Aufnahme der Rasthülse, wenn die Unterseite des Betätigungsknopfes auf der Kontaktfläche aufliegt und der Rastbolzen sich in der Verriegelungsposition befindet.

Die Position des Betätigungsknopfes, bei der die Schulter auf der Rasthülse aufliegt, lässt sich nur durch eine Drehung des Knopfes erreichen. Dabei wird die Schulter so weit gedreht, bis sie eine axiale Kerbe in der Wandung der Rasthülse erreicht und in dieser einrastet. In dieser Position kann der Rastbolzen in der erreichten Endposition entweder zeitweise oder dauerhaft verbleiben, wobei Änderungen der Position in axialer Richtung nicht möglich sind.

Wird die Schulter erneut so weit gedreht, dass sie einen axialen Schlitz in der Wandung der Rasthülse erreicht und dort aufgenommen wird, lässt sich der Betätigungsknopf mit der Schulter wieder in Richtung der stirnseitigen Kontaktfläche der Bolzenführung bewegen.

Es ist auch das umgekehrte Wirkprinzip des erfindungsgemäßen Rastbolzens möglich, bei dem nicht eine Betätigung durch Ziehen, sondern durch Drücken erforderlich ist. Bevorzugt wird in diesem Fall ein Federelement vorgesehen, das den Bolzen in eine axiale Endposition drückt.

Der Erfindungsgegenstand der vorliegenden Erfindung ergibt sich nicht nur aus dem Inhalt der einzelnen Patentansprüche, sondern auch aus deren Kombination untereinander.

Alle in den Unterlagen, einschließlich der Zusammenfassung, offenbarten Angaben und Merkmale - insbesondere die in den Zeichnungen dargestellte räumliche Ausbildung - werden als erfindungswesentlich beansprucht, soweit sie einzeln oder in Kombination gegenüber dem Stand der Technik neu sind.

Soweit einzelne Gegenstände als "erfindungswesentlich" oder "wichtig" bezeichnet sind, bedeutet dies nicht zwangsläufig, dass diese Gegenstände den Gegenstand eines unabhängigen Anspruchs bilden müssen. Dies ergibt sich allein aus der jeweils geltenden Fassung des unabhängigen Schutzanspruchs.

Im Folgenden wird die Erfindung anhand mehrerer die Ausführungswege darstellender Zeichnungen näher erläutert. Aus den Zeichnungen und ihrer Beschreibung gehen weitere erfindungswesentliche Merkmale und Vorteile der Erfindung hervor.

Es zeigen:
Figur 1: Schnittdarstellung eines Rastbolzens
Figur 2: Schnittdarstellung des Rastbolzens
Figur 3: gegenüber Fig.1. u. 2. um 90° gedrehte Schnittdarstellung des Rastbolzens
Figur 4: gegenüber Fig.1. u. 2. um 90° gedrehte Schnittdarstellung des Rastbolzens
Figur 5: perspektivische Schnittdarstellung des Rastbolzens
Figur 6: Schnittdarstellung eines montierten Rastbolzens
Figur 7: Schnittdarstellung eines Rastbolzens mit Rastsperre
Figur 8: Schnittdarstellung eines Rastbolzens mit Rastsperre

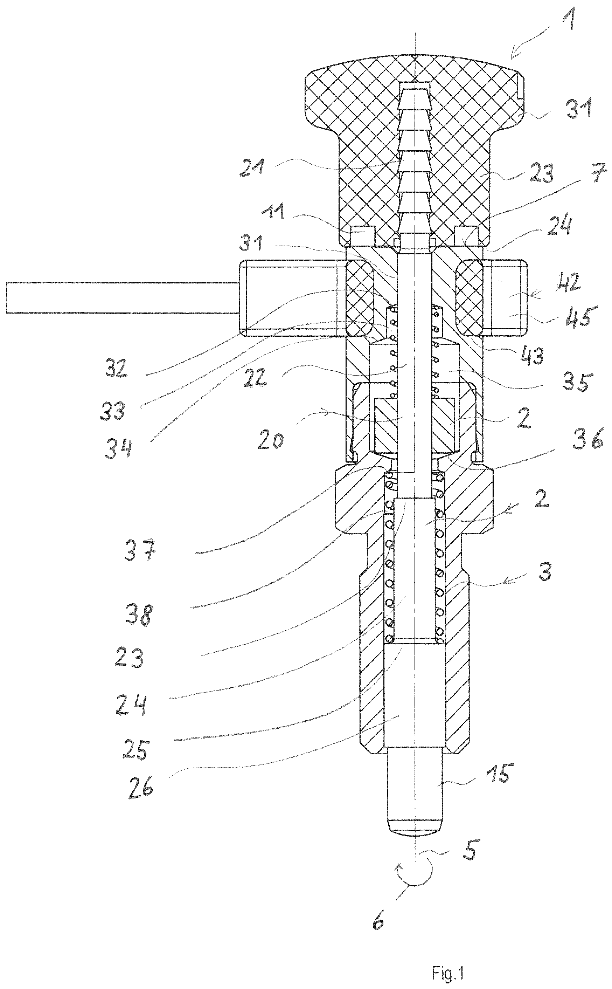

Figur 1 zeigt einen Rastbolzen 1, der einen Bolzen 2 umfasst, welcher in einer Bolzenführung 3 in axialer Richtung geführt ist. Der Bolzen 2 bewegt sich entlang einer Achse 5 und kann zusätzlich um diese Achse in Drehrichtung 6 gedreht werden.

Der Bolzen 2 besitzt ein Verriegelungsende 15 und ein Betätigungsende 16, das in Figur 1 mit einem Betätigungsknopf 40 ausgestattet ist. Die vorliegende Erfindung ist jedoch nicht auf die Verwendung eines Betätigungsknopfes beschränkt; alternativ können auch ein Hebel, ein Riegel, ein T-Griff oder ein anderes Betätigungselement eingesetzt werden.

Über den Betätigungsknopf 40 kann der Bolzen 2 axial entlang der Achse 5 in der Bolzenführung 3 bewegt und um diese Achse in Drehrichtung 6 verdreht werden.

Der Betätigungsknopf 40 weist eine Unterseite 41 auf, die sich gegenüber einer Kontaktfläche 7 an der Stirnseite der Bolzenführung 3 befindet. Im gezeigten Beispiel gemäß Figur 1 liegt die Unterseite 41 auf der Kontaktfläche 7 auf.

Die Bolzenführung 3 weist unterhalb der Kontaktfläche 7 eine Nut 43 auf, in die ein Sensorelement 42 eingebracht ist. Im gezeigten Beispiel nach Figur 1 ist das Sensorelement 42 ringförmig in die Wandung der Bolzenführung 3 integriert. Das Sensorelement 42 besteht aus einem Sensorhalter 45 und mindestens einem Sensor 44.

Der Sensor 44 kann beispielsweise in einen kunststoffförmigen Sensorhalter 45 eingespritzt sein. Allgemein wird ein Sensorhalter 45 aus Kunststoff bevorzugt.

Neben der in den Sensorhalter 45 eingespritzten Variante des Sensors 44 kann der Sensor 44 auch durch Einstecken in den Sensorhalter 45 befestigt werden.

In dem in Figur 1 gezeigten Beispiel wird das Sensorelement 42 durch Klemmkraft in der Nut 43 gehalten. Diese Klemmkraft entsteht durch die hufeisenförmige Geometrie des Sensorelements 42, das auf die Bolzenführung 3 im Bereich der ringförmigen Nut 43 aufgeschoben ist. Die Erfindung ist jedoch nicht auf diese Hufeisen- oder U-Form des Sensorhalters beschränkt; auch eine kreissegmentförmige Umfassung ist möglich.

Die Bolzenführung 3 verfügt über einen Führungskanal 30, in dem der Bolzen 2 beweglich geführt ist. Der Führungskanal 30 weist mehrere zylindrische Abschnitte mit unterschiedlichen Durchmessern auf, worauf später näher eingegangen wird.

Im Inneren der Bolzenführung 3 ist der Bolzen 2 abschnittsweise von einem ringförmigen Magneten 12 umschlossen.

Der Bolzen 2 besitzt einen Schaft 20 mit mehreren Abschnitten unterschiedlicher Durchmesser. Der Abschnitt 21 des Schaftes 20 ist am Betätigungsende kraftschlüssig im Betätigungsknopf 40 aufgenommen. Direkt unterhalb des Betätigungsknopfes 40 schließt sich ein weiterer Abschnitt 22 an, der im Beispiel nach Figur 1 durch eine zylindrische Bolzenführung 31 geführt ist. Diese Bolzenführung 31 mündet in eine Kammer 33, die einen größeren Durchmesser als die Bolzenführung 31 aufweist. Zwischen der Bolzenführung 31 und der Kammer 33 befindet sich ein Absatz 32.

Die Kammer 33 geht in eine weitere Kammer 35 über, deren Durchmesser größer als jener der Kammer 33 ist. Der Übergang zwischen Kammer 33 und Kammer 35 ist durch einen Absatz 34 definiert. Die Kammer 35 wird in Richtung des Verriegelungsendes 15 durch einen Absatz 36 begrenzt, wobei lediglich eine zentrale Aussparung für die Führung des Schaftes 20 des Bolzens 2 vorhanden ist. Unterhalb dieser Aussparung folgt die Kammer 38, die einen geringeren Durchmesser als die Kammer 35 aufweist. Hier befindet sich ein weiterer Absatz 37. Die Kammer 38 verläuft zylinderförmig bis zum Ende der Bolzenführung 3.

Im Zustand nach Figur 1 verläuft der Abschnitt 22 des Schaftes 20 durch die Bolzenführung 31, die Kammer 33 und die Kammer 35 und mündet in die Kammer 38. Dort geht er in den Abschnitt 24 über, der einen größeren Durchmesser als Abschnitt 22 aufweist. Der Übergang zwischen Abschnitt 22 und Abschnitt 24 ist durch eine Schulter 23 definiert. Abschnitt 24 setzt sich in der Kammer 38 in Abschnitt 26 fort, der wiederum einen größeren Durchmesser als Abschnitt 24 aufweist. Die Verbindung zwischen Abschnitt 24 und Abschnitt 26 wird durch die Schulter 25 gebildet. Abschnitt 26 geht schließlich in das Verriegelungsende 15 über, das ebenfalls zylindrisch ausgeführt ist.

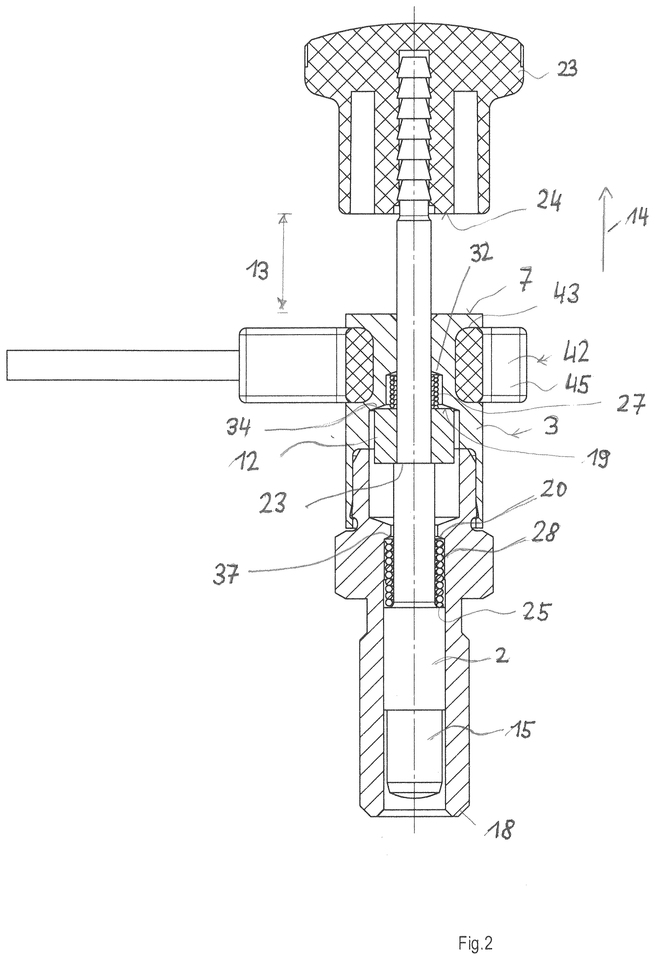

Figur 2: Wird der Betätigungsknopf 40 gemeinsam mit dem Magneten 12 in Pfeilrichtung 14 auf die Anschlagfläche 9 zu bewegt, erfasst der Sensor 44 diese Annäherung als Messgröße und wandelt sie in ein weiterverarbeitbares elektrisches, pneumatisches oder hydraulisches Signal um. Dadurch kann insbesondere der Abstand zwischen der Unterseite 41 des Betätigungsknopfes 40 und der Kontaktfläche 7 der Bolzenführung 3 bestimmt und überwacht werden.

Figur 2 zeigt die Entriegelungsstellung der Erfindung. Diese wird durch Ziehen des Betätigungsknopfes 40 bzw. des Betätigungselements herbeigeführt. Dadurch wird der Bolzen 2 in die Bolzenführung 3 hineingezogen, sodass das Verriegelungsende 15 in die offene Stirnseite 18 der Bolzenführung 3 zurückgezogen wird und die Entriegelungsstellung einnimmt.

Dabei wird die Feder 28, die auf der Schulter 25 des Bolzens 2 aufliegt, zwischen der Schulter 25 und dem Absatz 37 im Inneren der Bolzenführung 3 komprimiert. In dieser Position befindet sich die Unterseite 41 des Betätigungsknopfes 40 in einem definierten Abstand 13 zur Kontaktfläche 7 der Bolzenführung 3.

Der Sensor 44 detektiert den sich annähernden Magneten 12 und sendet ein entsprechendes Signal.

Der Magnet 12 besteht mindestens teilweise aus einem magnetischen Material. Ein solches Material kann beispielsweise im Spritzgussverfahren in den Produktionsprozess des Magneten 12 integriert werden. Alternativ kann der Magnet in einem Sinterprozess hergestellt werden, wobei die magnetischen Partikel unter Druck verdichtet werden.

Der Magnet 12 weist in Richtung des Betätigungsendes 16 eine Oberseite 19 auf, auf der eine Seite der Feder 27 aufliegt. Die gegenüberliegende Seite der Feder 27 stützt sich am Absatz 32 ab. In der in Figur 2 dargestellten Entriegelungsstellung ist die zwischen der Oberseite 19 und dem Absatz 32 eingespannte Feder 27 komprimiert. Dabei stehen mindestens die Randbereiche der Oberseite 19 in Kontakt mit dem Absatz 34.

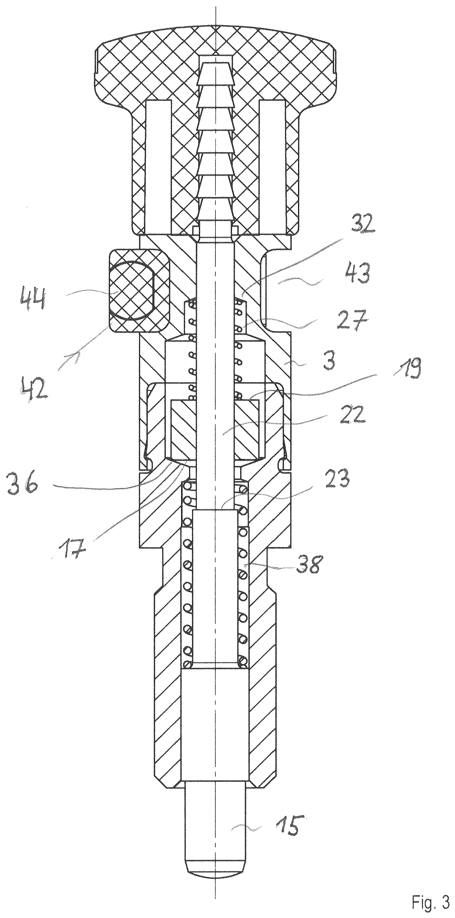

Figur 3 zeigt gegenüber den Figuren 1 und 2 um 90° gedrehte Ansicht, mit dem Sensorelement 42 das mit dem klammerförmigen Sensorhalter in der Nut 43 angeordnet ist. Diese Nut befindet sich im oberen Bereich der hülsenartigen Bolzenführung 3. Der Sensor 44 ist dezentral im Sensorhalter 45 integriert.

Der Sensorhalter 45 verfügt über eine Aufnahmebohrung, in die der Sensor 44 eingeführt werden kann. Die Fixierung kann beispielsweise durch axiales Ein- oder Aufstecken erfolgen oder durch ein lösbares bzw. dauerhaft verrastendes Verschließen, etwa mittels eines Kabelbinders.

Der Magnet 12 zur Positionsbestimmung des Bolzens 2 umschließt lose den Außenumfang des Abschnitts 22 und liegt mit seiner Unterseite 17 mindestens teilweise am Absatz 36 auf. Die Schulter 23 steht dabei nicht in Kontakt mit dem Magneten 12 und befindet sich innerhalb der Kammer 38.

Auf die Oberseite 19 des Magneten 12 wirkt die Feder 27, die sich oberhalb am Absatz 32 abstützt. Die Feder drückt den Magneten 12 auf den Absatz 36, wenn sich der Rastbolzen in der Verriegelungsstellung befindet und das Verriegelungsende 15 ausgefahren ist.

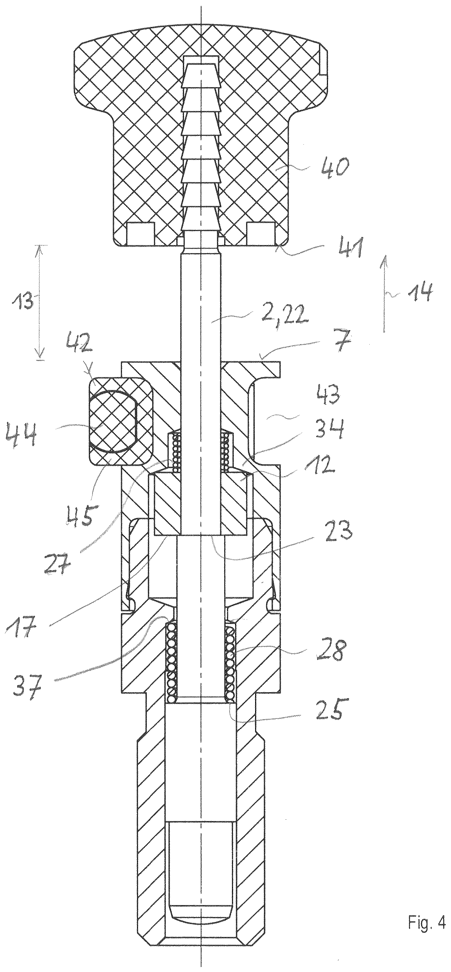

In Figur 4 ist der Betätigungsknopf 40 ist in Pfeilrichtung 14 gezogen, so dass sich ein Abstand 13 zwischen der Unterseite 41 und der Kontaktfläche 7 einstellt. Dabei ragt der Bolzen 2 mit seinem Abschnitt 22 teilweise aus der Bolzenführung 3 heraus. Der Bolzen 2 nimmt über seine Schulter 23 den Magneten 12 ebenfalls in Pfeilrichtung 14 in axialer Richtung mit, bis dieser mit seiner Oberseite 19 an dem Absatz 34 anstößt.

Wird so der Magnet 12 in Richtung des Sensors 44 geführt, erkennt dieser die Position des Magneten und kann die momentane bzw. entriegelte oder zurückgezogene Position des Bolzens 2 erkennen.

Zwischen der Oberseite 19 und dem Absatz 32 sowie zwischen der Schulter 25 und dem Absatz 37 wird jeweils eine Feder 27, 28 komprimiert.

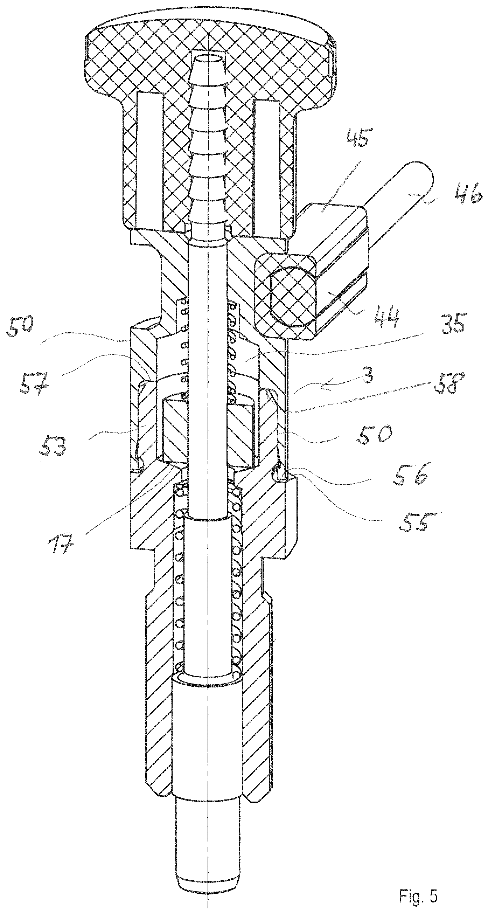

Figur 5 zeigt eine perspektivisch geschnittene Darstellung von Figur 3. Der Sensorhalter 45 ist mit einem Kabel 46 verbunden, das zu einer nicht dargestellten Signalverarbeitungsvorrichtung führt.

Die Bolzenführung 3 ist als zweigeteilte Baugruppe ausgeführt und kann im Bereich des Magneten 12 getrennt werden. Sie besteht aus einem oberen Gehäuse 50 und einem unteren Gehäuse 52, die über eine Gewindeverbindung 54 - bestehend aus einem Außengewinde und einem Innengewinde - miteinander verschraubt werden.

In weiteren Ausführungsformen, kann diese Verbindung z. B. durch einen Pressverband oder eine Laserverschweißung gebildet werden.

Das obere Gehäuse 50 weist eine integrale, werkstoffhomogene Hülse 51 auf, deren Wandstärke ab einem definierten Absatz 58 radial nach außen hin reduziert ist.

Das untere Gehäuse 52 verfügt ebenfalls über eine integrale Hülse 53, deren Wandstärke im Bereich der Gewindeverbindung 54 radial nach innen hin verringert ist. Diese Wandstärkenreduzierung beginnt an einem Fortsatz 55.

Im montierten Zustand liegt die Stirnseite 56 der Hülse 51 an diesem Fortsatz 55 an, während die Stirnseite 57 der Hülse 53 auf dem Absatz 58 aufliegt. Idealerweise erfolgt ein direkter Kontakt der Stirnseiten, jedoch können werkstoffbedingte Fertigungstoleranzen dazu führen, dass kein vollständiger Anlagekontakt vorliegt. Ungeachtet dessen gewährleistet die Gewindeverbindung 54 die erforderliche mechanische Festigkeit.

Da die Bolzenführung 3 im Bereich der Gewindeverbindung 54 teilbar ist, besteht die Möglichkeit, auf den Magneten 12 zuzugreifen. Dadurch kann der Magnet 12 zusammen mit der Feder 27 zunächst auf den Schaft 20 aufgeschoben werden, bevor die Hülse 51 mit der Hülse 53 verschraubt wird. So entsteht eine Kammer 35, in der der Magnet 12 beweglich gelagert ist.

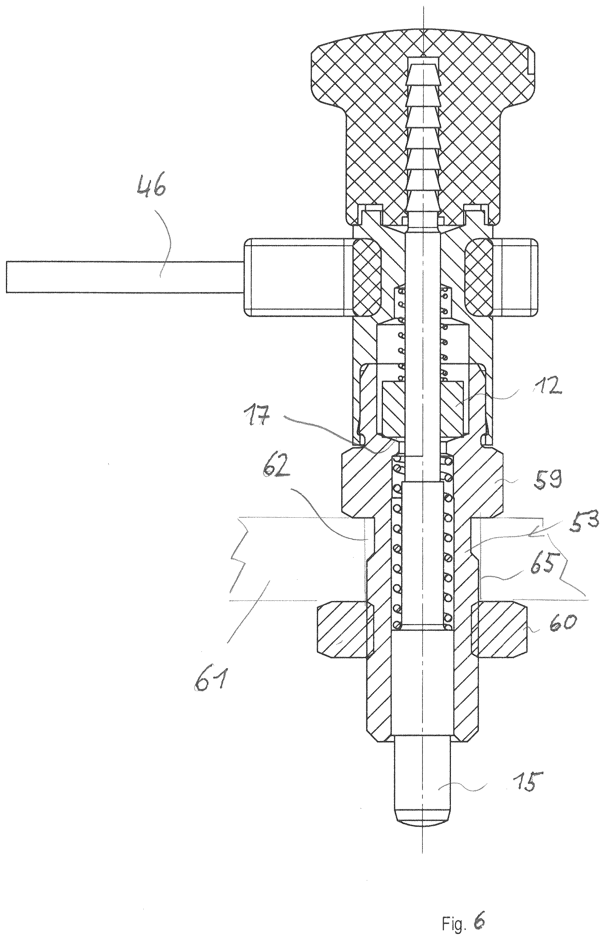

Figur 6 zeigt einen Gewindering 60, der über ein Innengewinde verfügt und auf das Außengewinde 63 der Hülse 53 geschraubt werden kann. Das Außengewinde 63 befindet sich in dem dem Betätigungsende zugewandten Abschnitt der Hülse 53.

Der Rastbolzen 1 kann durch eine Durchgangsbohrung 62 in der Platte 61 eingeführt werden, bis der Montagekragen 59 auf der Oberseite der Platte 61 aufliegt. Anschließend wird der Gewindering 60 von der Unterseite auf das Außengewinde 63 des Rastbolzens aufgeschraubt, bis er an der Unterseite der Platte 61 anliegt. Dadurch wird der Rastbolzen 1 kraftschlüssig an der Platte 61 fixiert. Zur erleichterten Montage kann der Gewindering und/oder der Montagekragen eine Werkzeugangriffsfläche, beispielsweise in Form eines Sechskants, aufweisen.

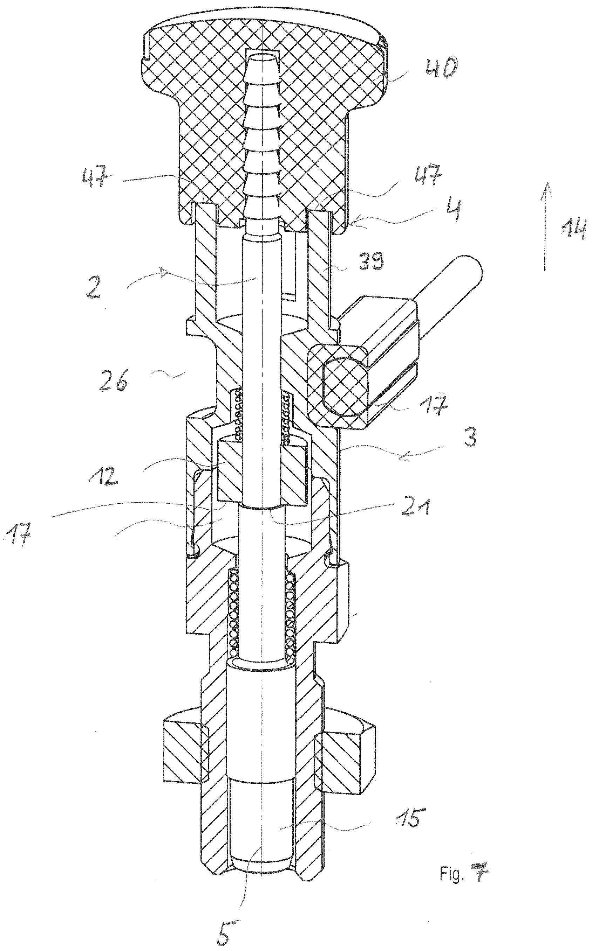

Figur 7: Der Rastbolzen 1 weist in dieser Ausführungsform eine Rastsperre auf, um den Betätigungsknopf 40 in einer definierten Endposition (Entriegelungsposition) zeitweise oder dauerhaft zu fixieren.

Wenn der Bolzen 2 in Pfeilrichtung 14 aus der Bolzenführung 3 hinausgezogen wird, kann sich der Betätigungsknopf 40 mit seiner Unterseite 41 auf der Stirnseite der Rasthülse 39 abstützen. Dazu weist der Betätigungsknopf eine nutförmige Schulter 47 auf, an der die Stirnseite der Rasthülse 39 zur Anlage kommt. Bevorzugt sind zwei Schultern 47 auf einer Kreisbahn angeordnet.

Die Schulter 47 unterbricht den zylindrischen Aufnahmeraum 48 abschnittsweise. Der Aufnahmeraum 48 dient zur Aufnahme der Rasthülse 39, wenn sich die Unterseite des Betätigungsknopfes 40 auf der Kontaktfläche 7 befindet, wie beispielsweise in Figur 1 dargestellt.

Die in Figur 7 gezeigte Position des Betätigungsknopfes 40, der auf der Rasthülse 39 aufliegt, lässt sich erst durch eine Bewegung des Knopfes 40 entlang der Achse 5 in Pfeilrichtung 14 sowie durch eine anschließende Drehbewegung um diese Achse lösen.

Sobald die Schulter 47 nicht mehr in Kontakt mit der Stirnseite der Rasthülse 39 ist, kann der Knopf 40 um die Achse 5 gedreht werden, z. B. um 90°, bis die Schulter 47 einen Schlitz in der Wandung der Rasthülse 39 erreicht. Der Schlitz nimmt die Schulter 47 auf, sodass die Rasthülse 39 in den Aufnahmeraum 48 eingeführt werden kann.

Somit kann der Betätigungsknopf 40 wieder entgegen der Pfeilrichtung 14 in Richtung der stirnseitigen Kontaktfläche 7 der Bolzenführung 3 bewegt werden.

Die Abfrage des Rastbolzens erfolgt beim Anfahren oder Erreichen der in Figur 7 (bzw. 2, 4) gezeigten Position, d. h. im ausgerasteten Zustand. In dieser Position ist das Betätigungsende 15 in die Bolzenführung 3 eingezogen.

Im dargestellten Beispiel gemäß Figur 7 befindet sich die Unterseite 41 des Betätigungsknopfes 40 in einem definierten Abstand 13 zur Kontaktfläche 7 der Bolzenführung 3. Dabei ist die Feder 28, die auf der Schulter 25 des Bolzens 2 aufliegt, zwischen der Ringschulter und einem Absatz 37 im Inneren der Bolzenführung 3 komprimiert.

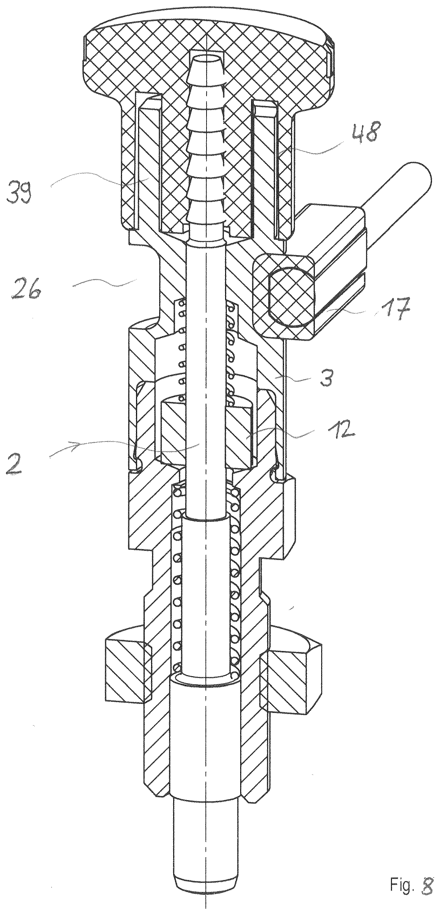

Figur 8 zeigt den Rastbolzen in geschnittener Ansicht. In dieser Position hat der Schlitz in der Wandung der Rasthülse 39 die Schulter 47 des Betätigungsknopfes 40 aufgenommen, und die Rasthülse 39 ist in den Aufnahmeraum 48 eingeführt. Der verwendete Sensor 44 ist hierbei ein Magnetfeldsensor.

Wird nun der Magnet 12 in Richtung des Sensorelements 42 geführt, erkennt dieses die Position des Magneten und kann die momentane, entriegelte bzw. zurückgezogene/entrastete Position des Bolzens 2 feststellen.

Die in Figur 7 gezeigte Position des Betätigungsknopfes 40, in der die nutförmige Schulter 47 auf der Rasthülse 39 aufliegt, lässt sich erst durch eine Bewegung des Knopfes 40 entlang der Achse 5 entgegen der Pfeilrichtung 14 lösen. Sobald die Schulter 47 nicht mehr in Kontakt mit der Stirnseite der Rasthülse 39 ist, kann der Knopf 40 um die Achse 5 gedreht werden, bis die Schulter 47 einen Schlitz in der Wandung der Rasthülse 39 erreicht. Der Schlitz nimmt die Schulter 47 auf, sodass die Rasthülse 39 in den Aufnahmeraum 48 eingeführt werden kann. Unterstützend wirken hierbei die Federn 27 und 28, die als Rückstellfedern dienen.

Somit kann der Betätigungsknopf 40 entgegen der Pfeilrichtung 14 in Richtung der stirnseitigen Kontaktfläche 7 der Bolzenführung 3 bewegt werden, bis er die Endposition gemäß Figur 8 einnimmt.

Die vorliegende Erfindung beansprucht auch Rastbolzen ohne die in den Figuren dargestellte Rastsperre.

### Zeichnungslegende

- 1: Rastbolzen
- 2: Bolzen
- 3: Bolzenführung
- 4: Rastsperre
- 5: Achse
- 6: Drehrichtung
- 7: Kontaktfläche
- 8 9: Anschlagfläche
- 10: Bodenfläche
- 11 12: Magnet
- 13: Abstand
- 14: Pfeilrichtung
- 15: Verriegelungsende
- 16: Betätigungsende
- 17: Sensorelement
- 18: Stirnseite
- 19: Oberseite (von 12)
- 20: Schaft (von 2)
- 21: Abschnitt
- 22: Abschnitt
- 23: Schulter
- 24: Abschnitt
- 25: Schulter
- 26 27: Feder
- 28: Feder
- 29 30: Führungskanal
- 31: Bolzenführung
- 32: Absatz
- 33: Kammer
- 34: Absatz
- 35: Kammer
- 36: Absatz
- 37: Absatz
- 38: Kammer
- 39: Rasthülse
- 40: Betätigungsknopf
- 41: Unterseite
- 42: Sensorelement
- 43: Nut
- 44: Sensor
- 45: Sensorhalter
- 46: Kabel
- 47: Schulter
- 48: Aufnahmeraum
- 49 50: Gehäuse
- 51: Hülse
- 52: Gehäuse
- 53: Hülse
- 54: Gewindeverbindung
- 55: Fortsatz
- 56: Stirnseite (von 51)
- 57: Stirnseite (von 53)
- 58: Absatz
- 59: Montagekragen
- 60: Gewindering
- 61: Platte
- 62: Durchgangsbohrung
- 63: Außengewinde (von 53)

## Patentansprüche

1. Rastbolzen (1) mit einer zylindrischen Bolzenführung (3), in der ein axial verschiebbarer Bolzen (2) mit einem Verriegelungsende (15) und einem Betätigungsende (16) gelagert ist, wobei der Bolzen (2) zwischen zwei axialen Endpositionen verschiebbar ist und mit dem Betätigungselement verbunden ist, wobei an der Bolzenführung (3) mindestens ein Sensor (44) befestigt ist, der die Endpositionen des Bolzens (2) durch mindestens einen mit dem Bolzen (2) verbundenen Magneten (12) erfasst und ein weiterverarbeitbares Signal erzeugt, wobei sich der Magnet (12) im Innenraum der Bolzenführung (3) befindet und an einer Schulter (23) am Außenumfang des Bolzens (2) anliegt und mit diesem in axialer Richtung bewegbar ist, **dadurch gekennzeichnet, dass** der Magnet (12) entlang des Schaftes (20) des Bolzen (2) axial verschiebbar gelagert ist.

2. Rastbolzen (1) nach Anspruch 1, **dadurch gekennzeichnet, dass** der Magnet (12) beim Ziehen des Bolzens (2) wegverzögert in den Erfassungsbereich des Sensors (44) gelangt.

3. Rastbolzen (1) nach Anspruch 1 oder 2, **dadurch gekennzeichnet, dass** die Schulter (23) erst ab der Mitte zwischen der ersten axialen Endposition oder der zweiten axialen Endposition den Magneten (12) in Richtung der zweiten axialen Endposition mitnimmt.

4. Rastbolzen (1) nach einem der Ansprüche 1 bis 3, **dadurch gekennzeichnet, dass** der Magnet (12) in einem Hohlraum (33, 35) der Bolzenführung (3) gelagert ist, der in Richtung der ersten und dem Betätigungsende (16) zugewandten axialen Endposition mit einem Absatz (32) und in Richtung der zweiten, dem Verriegelungsende (15) zugewandten axialen Endposition mit einem zweiten Absatz (36) begrenzt ist, und dass der Bolzen (2) durch jeweils eine Aussparung zwischen den Absätzen (32, 36) hindurchgeführt ist.

5. Rastbolzen (1) nach Anspruch 4, **dadurch gekennzeichnet, dass** zwischen einer Oberseite (19) des Magneten (12) und dem Absatz (32) eine Feder (27) eingespannt ist.

6. Rastbolzen (1) nach Anspruch 4, **dadurch gekennzeichnet, dass** zwischen einer Oberseite (19) des Magneten (12) und dem Absatz (32) ein elastomeres Element eingespannt ist.

7. Rastbolzen (1) nach einem der Ansprüche 4 bis 6, **dadurch gekennzeichnet, dass** der Hohlraum sich aus einer oberen, dem Betätigungsende (16) zugewandten Kammer (33) und einer unteren, dem Verriegelungsende (15) zugewandten Kammer (35) zusammensetzt.

8. Rastbolzen (1) nach Anspruch 7, **dadurch gekennzeichnet, dass** die Kammer (33) gegenüber der Kammer (35) im Durchmesser verkleinert ist und dass der Übergang zwischen der Kammer (35) in die Kammer (33) durch einen Absatz (34) gebildet ist.

9. Rastbolzen (1) nach einem der Ansprüche 1 bis 8, **dadurch gekennzeichnet, dass** eine Feder (28) auf einer Schulter (25) des Bolzens (2) aufliegt, und zwischen der Schulter (25) und dem Absatz (37) im Inneren der Bolzenführung 3 unterhalb der Kammer (35) komprimierbar ist.

10. Rastbolzen (1) nach Anspruch 7, **dadurch gekennzeichnet, dass** der Magnet (12) bei Bewegung in die ersten, dem Betätigungsende (16) zugewandten axialen Endposition an dem Absatz (34) zur Anlage kommt.

11. Rastbolzen (1) nach einem der Ansprüche 4 bis 10, **dadurch gekennzeichnet, dass** der Magnet (12) bei Bewegung in die zweite, dem Verriegelungsende (15) zugewandten axialen Endposition an dem Absatz (36) zur Anlage kommt.

12. Rastbolzen (1) nach Anspruch 1, **dadurch gekennzeichnet, dass** Magnet (12) ringförmig oder segmentartig den Bolzen (2) umschließt

13. Rastbolzen (1) nach einem der Ansprüche 4 bis 12, **dadurch gekennzeichnet, dass** die Bolzenführung (3) mit dem Hohlraum (33, 35) als zweigeteilte Baugruppe ausgeführt ist und aus einem oberen Gehäuse (50) und einem unteren Gehäuse (52).

14. Rastbolzen (1) gemäß Anspruch 13, **dadurch gekennzeichnet, dass** die beiden Gehäuseteile (50, 52) mittels einer Gewindeverbindung (54), eines Pressverbands oder durch Laserschweißen miteinander verbunden sind.

15. Rastbolzen (1) gemäß einem der Ansprüche 1 bis 14, **dadurch gekennzeichnet, dass** der Bolzen (2) an einer oder beiden Endpositionen durch Rastmechanismen, Reibung oder Haftung gehalten wird.
